# EUROPEAN PATENT APPLICATION

(11) **EP 3 993 504 A1**
(43) Date of publication of application: **04.05.2022**
(21) Application number: 21809238.5
(22) Date of filing: 27.04.2021
(51) Int. Cl.: H04W 48/10, H04W 48/16, H04W 48/18

(54) **USER EQUIPMENT, WIRELESS ACCESS NETWORK NODE, AND METHOD THEREFOR**

(30) Priority: 21.05.2020 JP 2020088819
(71) Applicant: NEC Corporation, 108-8001 Tokyo (JP)
(72) Inventor: TAKAKURA, Tsuyoshi, Tokyo 110-0012 (JP); TAMURA, Toshiyuki, Tokyo 108-8001 (JP)
(74) Representative: MacDougall, Alan John Shaw
(86) International application number: PCT/JP2021/016857
(87) International publication number: WO 2021/235204

(57) **Abstract**

A UE (1) receives system information from at least one radio access network (RAN) node (2A to 2C) before the UE (1) performs roaming outside a range of a HPLMN of the UE (1). The system information includes information indicating at least one VPLMN. The system information further includes an indication, for each of the at least one VPLMN, of whether a particular communication service that is associated with at least one network slice instance (NSI) of a network slice of the HPLMN can be provided in at least one NSI of a network slice of the VPLMN. This can, for example, facilitate the UE to select for roaming a VPLMN in which a particular communication service provided in at least one NSI of a network slice of the HPLMN is available in an NSI of the VPLMN.

## Description

### Technical Field

The present disclosure relates to radio communication networks, and in particular to Public Land Mobile Network (PLMN) selection.

### Background Art

The 5G system (5GS) supports network slicing. Network slicing makes it possible to create multiple logical networks on top of physical networks. Each logical network is called a network slice. A network slices provides specific network capabilities and network characteristics. In order to form a single network slice, a network slice instance (NSI) is defined by a Network Function (NF) instance and resources (e.g., computer processing, storage, and networking resources) in a Core Network (CN). An NSI may be defined as a set of network function (NF) instances and resources in the CN; and an access network (AN) (one or both of a Next Generation Radio Access Network (NG-RAN) and a Non-3GPP Interworking Function (N3IWF)). In addition, the 3rd Generation Partnership Project (3GPP) has started working on Release 17 in the first quarter of 2020. Enhancement of network slices will be discussed for Release 17.

Non-Patent Literature 1 discloses a study to support the Generic Network Slice Template (GST) attributes proposed by the GSM Association (GSMA) in the 5G system (5GS). The GST is documented in Non-Patent Literature 2. The GST is a set of attributes that can characterize a type of network slice/service. The GST is generic and is not related to any specific network deployment. Several Network Slice Types (NESTs) can be derived from the GST by assigning values to the applicable attributes defined in the GST. In other words, a NEST is a GST filled with values. The attributes and their values are assigned to satisfy a set of requirements derived from a use case of a Network Slice Customer (NSC). Specifically, an NSC (e.g., automotive, industry 4.0 vertical) provides requirements for its desired use case to a Network Slice Provider (NSP). The NSP maps these requirements, along with the appropriate values to generate NESTs, into attributes of the GST.

One of the attributes of the GST documented in the Non-Patent Literature 2 is "area of service". This attribute specifies the area where the terminals can access a particular network slice. Therefore, this attribute specifies the list of the countries where the service will be provided. The list is unique to NSPs and their roaming agreements. If the list contains more than one entry, roaming agreements between Home PLMNs (HPLMNs) and Visited PLMNs (VPLMNs) are required.

Non-Patent Literature 1 in Section 5.8 describes the impact of the area of service attribute of the GST on PLMN selection in roaming. Specifically, it is assumed that a Single Network Slice Selection Assistance Information (S-NSSAI) of the HPLMN is available only in certain (v)PLMNs in the country where the terminal (i.e., User Equipment (UE)) is roaming. The S-NSSAI is an identifier of a network slice. In this case, the UE has to select a PLMN(s) with no awareness as to whether the (v)PLMN supports the S-NSSAI of the HPLMN or not. The UE cannot know whether a selected (v)PLMN supports the S-NSSAI of the HPLMN until it attempts to register with the selected (v)PLMN and is allowed an S-NSSAI in the (v)PLMN (i.e., provided with an Allowed NSSAI in the (v)PLMN) or is provided with a Configured NSSAI in the (v)PLMN. For this reason, Non-Patent Literature 1 suggests that the 3GPP needs to discuss whether and how to support S-NSSAI-aware PLMN selection.

The PLMN selection in the 5GS is described, for example, in Non-Patent Literature 3.

### Citation List

### Non Patent Literature

[Non-Patent Literature 1] 3GPP TR 23.700-40 V0.3.0 (2020-01) "3rd Generation Partnership Project; Technical Specification Group Services and System Aspects; Study on enhancement of network slicing; Phase 2 (Release 17)", January 2020
[Non-Patent Literature 2] GSM Association Official Document NG.116, " Generic Network Slice Template Version 2.0", October 2019
[Non-Patent Literature 3] 3GPP TS 23.122 V16.5.0 (2020-03) "3rd Generation Partnership Project; Technical Specification Group Core Network and Terminals; Non-Access-Stratum (NAS) functions related to Mobile Station (MS) in idle mode (Release 16)", March 2020

### Summary of Invention

### Technical Problem

At present, it is not clear how the 5GS will support S-NSSAI-aware PLMN selection. For example, a UE may wish to use a particular communication service provided by at least one network slice instance of a network slice of the HPLMN, also in at least one network slice instance of a network slice of a (V)PLMN different from the HPLMN. However, the UE has to make PLMN selection without knowing which VPLMN such particular communication service is available in.

One of the objects to be attained by embodiments disclosed herein is to provide apparatuses, methods, and programs that contribute to facilitating a UE to select for roaming a VPLMN in which a particular communication service provided in at least one network slice instance of a network slice of the HPLMN is available in a network slice instance of the VPLMN. It should be noted that this object is merely one of the objects to be attained by the embodiments disclosed herein. Other objects or problems and novel features will be made apparent from the following description and the accompanying drawings.

### Solution to Problem

In a first aspect, a UE includes at least one memory and at least one processor coupled to the at least one memory. The at least one processor is configured to receive system information from at least one radio access network (RAN) node before the UE performs roaming outside a range of an HPLMN of the UE. The system information transmitted from each RAN node includes information indicating at least one Visited PLMN (VPLMN). The system information transmitted from each RAN node further includes an indication of whether a particular communication service that is associated with at least one network slice instance of a network slice of the HPLMN can be provided in at least one network slice instance of a network slice of each VPLMN.

In a second aspect, a RAN node includes at least one memory and at least one processor coupled to the at least one memory. The at least one processor is configured to transmit system information in a cell. The system information includes information indicating at least one PLMN. The system information further includes an indication of whether a particular communication service that is associated with at least one network slice instance of a network slice of a different PLMN than the at least one PLMN can be provided in at least one network slice instance of each PLMN.

In a third aspect, a method performed by a UE includes receiving system information from at least one RAN node before the UE performs roaming outside a range of a HPLMN of the UE. The system information transmitted from each RAN node includes information indicating at least one Visited PLMN (VPLMN). The system information transmitted from each RAN node further includes an indication of whether a particular communication service that is associated with at least one network slice instance of a network slice of the HPLMN can be provided in at least one network slice instance of a network slice of each VPLMN.

In a fourth aspect, a method performed by a RAN node includes transmitting system information in a cell. The system information includes information indicating at least one PLMN. The system information further includes an indication of whether a particular communication service that is associated with at least one network slice instance of a network slice of a different PLMN than the at least one PLMN can be provided in at least one network slice instance of each PLMN.

In a fifth aspect, a program includes instructions (software codes) that, when loaded into a computer, cause the computer to perform the method according to the above-described third or fourth aspect.

### Advantageous Effects of Invention

According to the above-described aspects, it is possible to provide apparatuses, methods, and programs that contribute to facilitating a UE to select for roaming a VPLMN in which a particular communication service provided in at least one network slice instance of a network slice of the HPLMN is available in a network slice instance of the VPLMN.

### Brief Description of Drawings

FIG. 1 is a diagram showing a configuration example of a cellular communication network according to an embodiment;
FIG. 2 is a sequence diagram showing an example of signaling according to an embodiment;
FIG. 3 is a flowchart showing an example of operation of a UE according to an embodiment;
FIG. 4 is a block diagram showing a configuration example of a UE according to an embodiment; and
FIG.5 is a block diagram showing a configuration example of a RAN node according to an embodiment.

### Description of Embodiments

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3GPP fifth generation mobile communication system (5G system (5GS)). However, these embodiments may be applied to other cellular communication systems that support network slicing similar to that of the 5GS.

### First Embodiment

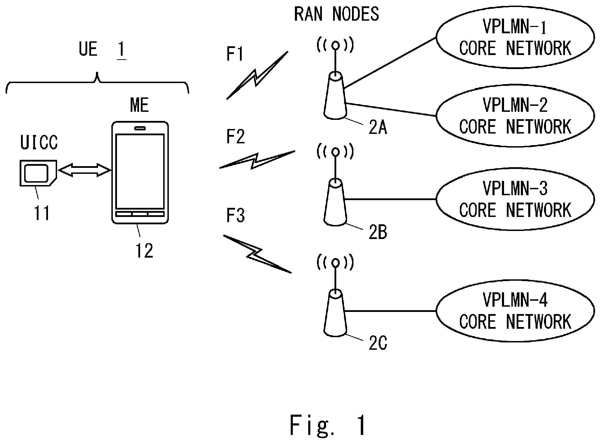

Figure 1 shows a configuration example of a cellular network (e.g., 5GS) according to the present embodiment. Each of the elements shown in Figure 1 is a network function and provides an interface as defined by the 3rd Generation Partnership Project (3GPP). Each of the elements (network functions) shown in Figure 1 can be implemented, for example, as a network element on dedicated hardware, as a software instance running on dedicated hardware, or as a virtual function instantiated on an application platform.

A UE 1 may be referred to as a radio terminal, mobile terminal, mobile station, Internet of Things (IoT) device, or by any other name. In the example of Figure 1, the UE 1 resides outside the range of the HPLMN. The UE 1 selects a VPLMN from among multiple VPLMNs (e.g., VPLMN-1 to VPLMN-4) that have roaming agreements with the HPLMN and attempts to roam to the selected VPLMN. In other words, the UE 1 attempts to register to the selected VPLMN.

As is well known, the HPLMN is a PLMN whose Mobile Country Code (MCC) and Mobile Network Code (MNC) of its PLMN identity match the MCC and MNC of the International Mobile Subscriber Identity (IMSI) of the UE 1. The IMSI is stored in a Universal Subscriber Identity Module (USIM). The UE 1 includes a Universal Integrated Circuit Card (UICC) 11 and Mobile Equipment (ME) 12, where the UICC 11 includes the USIM. The UICC 11 (USIM) may be an embedded UICC (embedded USIM) or an integrated UICC (integrated USIM).

The USIM (UICC11) of the UE 1 may contain an Equivalent HPLMN (EHPLMN) list. The EHPLMN list enables provision or configuration of multiple HPLMN codes. PLMN codes present in the EHPLMN list are replaced with the HPLMN code derived from the IMSI for the purpose of PLMN selection. The EHPLMN list may include the HPLMN code derived from the IMSI. This disclosure does not distinguish between the HPLMN and the EHPLMN, unless otherwise noted. In other words, in this disclosure, unless otherwise stated, the term HPLMN means a strict HPLMN or an EHPLMN.

On the other hand, a VPLMN is a PLMN different from the HPLMN (if the EHPLMN list does not exist or is empty) or from the EHPLMNs (if the EHPLMN list exists).

RAN nodes 2A to 2C are deployed in a radio access network (e.g., Next Generation Radio Access Network (NG-RAN)). Each RAN node 2 may be referred to as an access point, transmission/reception point (TRP), or other name. Each RAN node 2 (2A, 2B, or 2C) may be a gNB.

Each of the RAN nodes 2A to 2C is associated with at least one VPLMN. Each of the RAN nodes 2A to 2C may be associated with a plurality of VPLMNs. In the example of Figure 1, the RAN including the RAN node 2A is shared by multiple VPLMNs (i.e., VPLMN-1 and VPLMN-2) and is connected to the core networks of these multiple VPLMNs.

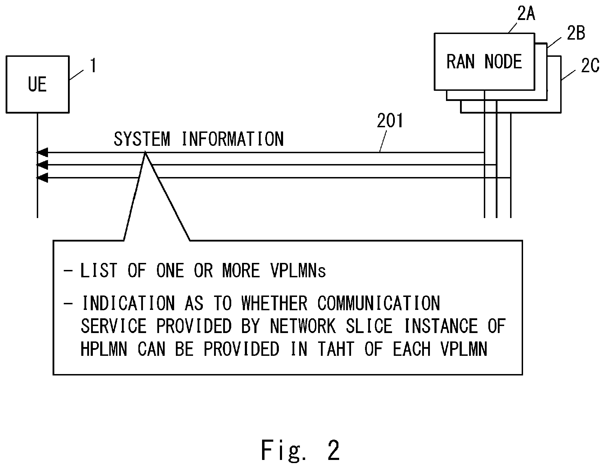

Figure 2 shows an example of signaling in the embodiment. The RAN nodes 2A to 2C broadcast system information in their respective cells (step 201). The system information indicates one or more (V)PLMNs to which the cell of each RAN node 2 belongs. Specifically, the system information transmitted from each RAN node 2 indicates one or more (V)PLMN identities. As is well known, each PLMN identity consists of a Mobile Country Code (MCC) and a Mobile Network Code (MNC). When the system information contains a list of PLMN identities, the MCC fields of the second and subsequent PLMN identities in the list need not be present (may be absent), which may be considered to be the same as the MCC field of the first PLMN identity in the list.

The system information transmitted from each RAN node 2 further includes an indication of whether a particular communication service provided by (or mapped to) at least one network slice instance of a network slice of the HPLMN of the UE 1 is provided by (or available in) at least one network slice instance of a network slice of each VPLMN. This particular communication service is provided by at least one network slice instance of a network slice of the HPLMN of the UE 1. In other words, the particular communication service is provided thorough at least one network slice instance of a network slice of the HPLMN of the UE 1. It can also be said that the particular communication service is built with at least one network slice instance of a network slice of the HPLMN of the UE 1. Furthermore, it can also be said that the particular communication service is supported by at least one network slice instance of a network slice of the HPLMN of the UE 1.

The indication may represent a provider (Communication Service Provider (CSP)) that provides the particular communication service. Specifically, the indication may indicate the name (or abbreviation, or nickname) of the CSP. For example, the CSP may be an automotive company that provides connected car services via at least one network slice instance of a network slice of the HPLMN. Alternatively, the CSP may be an information technology (IT) company that provides video streaming services via at least one network slice instance of a network slice of the HPLMN. The CSP can also be said to be a Network Slice Customer (NSC) that uses a network slice of the HPLMN as a service. Accordingly, the indication may indicate the name (or abbreviation, or nickname) of the NSC that uses at least one network slice instance of a network slice of the HPLMN to provide the particular communication service.

Additionally or alternatively, the indication may represent a 3rd party provider that uses the particular communication service. Specifically, the indication may indicate the name (or abbreviation, or nickname) of the 3rd party provider that uses the particular communication service. Such a 3rd party provider may be referred to as a Communication Service Customer (CSC).

Additionally or alternatively, the indication may represent a 3rd party service that uses (or is provided through) the particular communication service. Specifically, the indication may indicate the name (or abbreviation, or nickname) of the 3rd party service that uses the particular communication service.

Additionally or alternatively, the indication may represent the particular communication service provided by at least one network slice instance of a network slice of the HPLMN of the UE 1. Specifically, the indication may indicate the name (or abbreviation, or nickname) of that particular communication service.

Additionally or alternatively, the indication may indicate or include information that can identify a network slice of the HPLMN (e.g., S-NSSAI).

Additionally or alternatively, the indication may indicate or include information that can identify at least one network slice instance of the HPLMN (e.g., Network Slice Instance (NSI) ID).

Additionally or alternatively, the indication may indicate or include a combination of information that can identify a network slice of the HPLMN (e.g., S-NSSAI) and the PLMN identity of the HPLMN.

Additionally or alternatively, the indication may indicate or include a combination of information that can identify at least one network slice instance of the HPLMN and the PLMN identity of the HPLMN.

Additionally or alternatively, the indication may indicate or include a combination of information that can identify a network slice of the HPLMN (e.g., S-NSSAI) and the Mobile Country Code (MCC) of the HPLMN.

Additionally or alternatively, the indication may indicate or include a combination of information that can identify at least one network slice instance of the HPLMN and the Mobile Country Code (MCC) of the HPLMN.

The UE 1 receives system information from the RAN nodes 2A to 2C for PLMN selection. This allows the UE 1 to consider the above Indication contained in the system information in the PLMN selection. This makes it easier for the UE 1 to select for roaming a VPLMN where a particular communication service provided in one network slice instance of a network slice of the HPLMN is available in at least one network slice instance of a network slice of that VPLMN.

### Second Embodiment

A configuration example of a radio communication network according to this embodiment is the same as the example shown in Figure 1. This embodiment provides a specific example of PLMN selection performed by the UE 1.

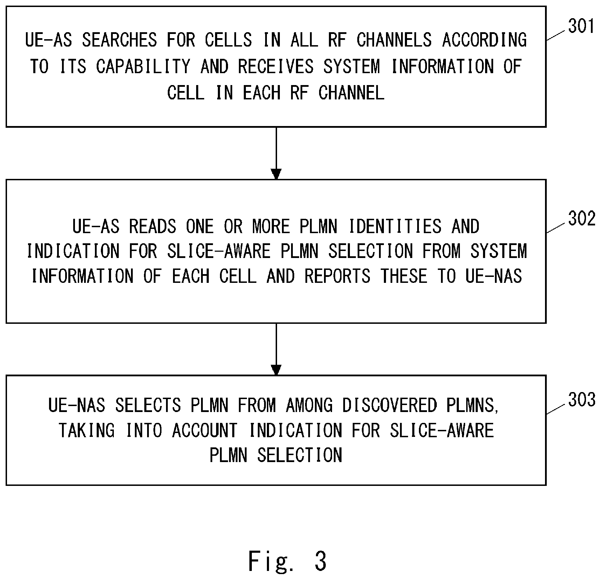

In some implementations, the UE 1 may perform PLMN selection according to the procedure shown in Figure 3.

In step 301, the Access Stratum (AS) of the UE 1 searches for cells in all Radio Frequency (RF) channels according to its capabilities and receives system information of the cells in each RF channel. On each RF channel (each carrier), the UE AS may search for the strongest cell and read the system information of that strongest cell.

In step 302, the UE AS reports to the UE Non-Access Stratum (NAS) one or more PLMN identities read from the system information of the strongest cell in each RF channel. If a list of PLMN identities is read from the system information, the UE AS reports all PLMN identities to the UE NAS.

In addition, in step 302, the UE AS reports the above indication (i.e., indication for slice-aware selection) to the UE NAS if it has been read from the system information of the strongest cell in each RF channel.

In step 303, the UE NAS selects a PLMN from among the discovered PLMNs, taking into account the indication for slice-aware selection. In some implementations, if the UE 1 is expecting (or preferring) to use a particular communication service when the PLMN selection is made, the UE NAS may not consider PLMNs in which this particular communication service is not available as candidates for the PLMN selection. The UE 1 may determine whether or not the particular communication service is available in each PLMN based on the indication for slice-aware selection. In other words, the UE 1 may determine whether or not the particular communication service is available in a network slice (or network slice instance) of each PLMN based on the indication for slice-aware selection.

In other implementations, if the UE 1 is expecting (or preferring) to use a particular communication service when the PLMN selection is made, the UE NAS may preferentially select a first PLMN that is included in an "Operator Controlled PLMN Selector with Access Technology" data file and in which the particular communication service can be provided in at least one network slice instance, over a second PLMN that is included in the "Operator Controlled PLMN Selector with Access Technology" data file but in which the particular communication service is not available. Based on the indication for slice-aware selection, the UE 1 may determine whether or not the particular communication service can be provided in a network slice (or network slice instance) of each PLMN. The "Operator Controlled PLMN Selector with Access Technology" list (or data file) is determined by a Network Operator (NOP) of the HPLMN and defines preferred PLMNs of the NOP in priority order. The "Operator Controlled PLMN Selector with Access Technology" list is stored in the UICC 11 (USIM) or the ME 12.

Additionally, or alternatively, if the UE 1 is expecting (or preferring) to use a particular communication service when the PLMN selection is made, the UE NAS may preferentially select a third PLMN that is included in an " User Controlled PLMN Selector with Access Technology" data file and in which the particular communication service can be provided in at least one network slice instance, over a fourth PLMN that is included in the " User Controlled PLMN Selector with Access Technology" data file but in which the particular communication service is not available. Based on the indication for slice-aware selection, the UE 1 may determine whether or not the particular communication service is available in a network slice (or network slice instance) of each PLMN. The "User Controlled PLMN Selector with Access Technology" list (or data file) is determined by a user of the UE 1 and defines preferred PLMNs of the user in priority order. The "User Controlled PLMN Selector with Access Technology" list is stored in the UICC 11 (USIM).

Additionally or alternatively, the UE 1 may perform PLMN selection in consideration of the indication for slice-aware selection as follows. For example, the UE 1 may select a PLMN by comparing the indication for slice-aware selection read from the system information with a slice-aware selection list (or data file).

Specifically, the UE 1 may select a fifth PLMN whose PLMN information in its system information is included in an "Operator Controlled PLMN Selector with Access Technology" data file and whose indication for slice-aware selection in its system information is included in the slice-aware selection list (or data file) when PLMN selection is made, preferentially over a sixth PLMN whose PLMN information in its system information is included in the "Operator Controlled PLMN Selector with Access Technology" data file but whose indication for slice-aware selection in its system information is not included in the slice-aware selection list (or data file). The "Operator Controlled PLMN Selector with Access Technology" list is stored in the UICC 11 (USIM) or the ME 12. The slice-aware selection list (or data file) is stored in the UICC 11 (USIM) or the ME 12.

Additionally, or alternatively, the UE 1 may select a seventh PLMN whose PLMN information in its system information is included in an "User Controlled PLMN Selector with Access Technology" data file and whose indication for slice-aware selection in its system information is included in the slice-aware selection list (or data file), preferentially over a sixth PLMN whose PLMN information in its system information is included in the "User Controlled PLMN Selector with Access Technology" data file but whose indication for slice-aware selection in its system information is not included in the slice-aware selection list (or data file). The "User Controlled PLMN Selector with Access Technology" list is stored in the UICC 11 (USIM). The slice-aware selection list (or data file) is stored in the UICC 11 (USIM) or the ME 12.

According to the PLMN selection procedure described above, when the UE 1 roams to a PLMN that is different from its HPLMN, the UE 1 can select a VPLMN from a plurality of VPLMNs that have roaming agreements with the HPLMN, where a particular communication service provided by at least one network slice instance of a network slice of the HPLMN can be provided by at least one network slice instance of a network slice of that VPLMN.

The UE 1 may hold a "Slice-aware PLMN selector with Access Technology" data file that is different from the "Operator Controlled PLMN Selector with Access Technology" data file and the "User Controlled PLMN Selector with Access Technology" data file. In this case, if the UE 1 is expecting (or preferring) to use a particular communication service when PLMN selection is made, the UE NAS may select a PLMN based on the "Slice-aware PLMN selector with Access Technology " data file. The "Slice-aware PLMN selector with Access Technology" data file may be pre-stored in the UE 1 (UICC 11 (USIM) or ME 12) or may be provided to the UE 1 directly or via an operator before or when the provider of that particular communication service (Communication Service Provider (CSP)) provides the service to the UE 1. The UE 1 may select a PLMN based on the "Slice-aware PLMN selector with Access Technology" data file when it receives the indication for slice-aware selection.

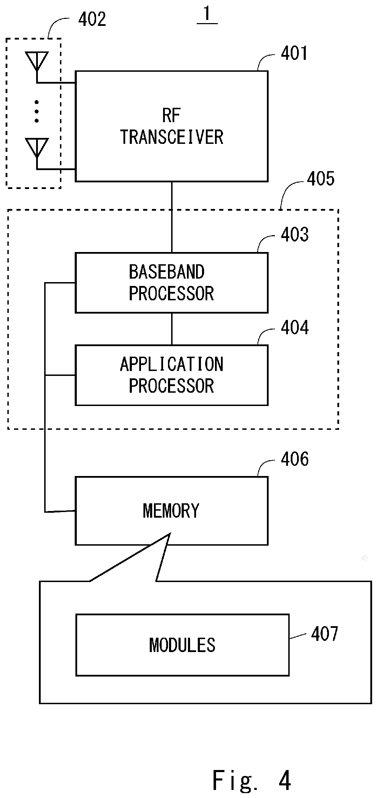

The following provides configuration examples of the UE 1 and the RAN node 2 (2A to 2C) according to the above-described embodiments. Figure 4 is a block diagram showing a configuration example of the UE 1. A Radio Frequency (RF) transceiver 401 performs analog RF signal processing to communicate with a RAN node. The RF transceiver 401 may include a plurality of transceivers. The analog RF signal processing performed by the RF transceiver 401 includes frequency up-conversion, frequency down-conversion, and amplification. The RF transceiver 401 is coupled to an antenna array 402 and a baseband processor 403. The RF transceiver 401 receives modulated symbol data (or OFDM symbol data) from the baseband processor 403, generates a transmission RF signal, and supplies the transmission RF signal to the antenna array 402. Further, the RF transceiver 401 generates a baseband reception signal based on a reception RF signal received by the antenna array 402 and supplies the baseband reception signal to the baseband processor 403. The RF transceiver 401 may include an analog beamformer circuit for beam forming. The analog beamformer circuit includes, for example, a plurality of phase shifters and a plurality of power amplifiers.

The baseband processor 403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 403 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 403 may include processing of Non-Access Stratum (NAS) protocols, Radio Resource Control (RRC) protocols, MAC Control Elements (CEs), and Downlink Control Information (DCIs).

The baseband processor 403 may perform Multiple Input Multiple Output (MIMO) encoding and pre-coding for beam forming.

The baseband processor 403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 404 described in the following.

The application processor 404 is also referred to as a CPU, an MPU, a microprocessor, or a processor core. The application processor 404 may include a plurality of processors (or processor cores). The application processor 404 loads a system software program (Operating System (OS)) and various application programs (e.g., a call application, a WEB browser, a mailer, a camera operation application, and a music player application) from a memory 406 or from another memory (not shown) and executes these programs, thereby providing various functions of the UE 1.

In some implementations, as represented by a dashed line (405) in Figure 4, the baseband processor 403 and the application processor 404 may be integrated on a single chip. In other words, the baseband processor 403 and the application processor 404 may be implemented in a single System on Chip (SoC) device 405. An SoC device may be referred to as a Large-Scale Integration (LSI) or a chipset.

The memory 406 is a volatile memory, a non-volatile memory, or a combination thereof. The memory 406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 406 may include, for example, an external memory device that can be accessed from the baseband processor 403, the application processor 404, and the SoC 405. The memory 406 may include an internal memory device that is integrated in the baseband processor 403, the application processor 404, or the SoC 405. Further, the memory 406 may include a memory in a Universal Integrated Circuit Card (UICC).

The memory 406 may store one or more software modules (computer programs) 407 including instructions and data to perform the processing by the UE 1 described in the above embodiments. In some implementations, the baseband processor 403 or the application processor 404 may load these software modules 407 from the memory 406 and execute the loaded software modules, thereby performing the processing of the UE 1 described in the above embodiments with reference to the drawings.

The control-plane processing and operations performed by the UE 1 described in the above embodiments can be achieved by elements other than the RF transceiver 401 and the antenna array 402, i.e., achieved by the memory 406, which stores the software modules 407, and one or both of the baseband processor 403 and the application processor 404.

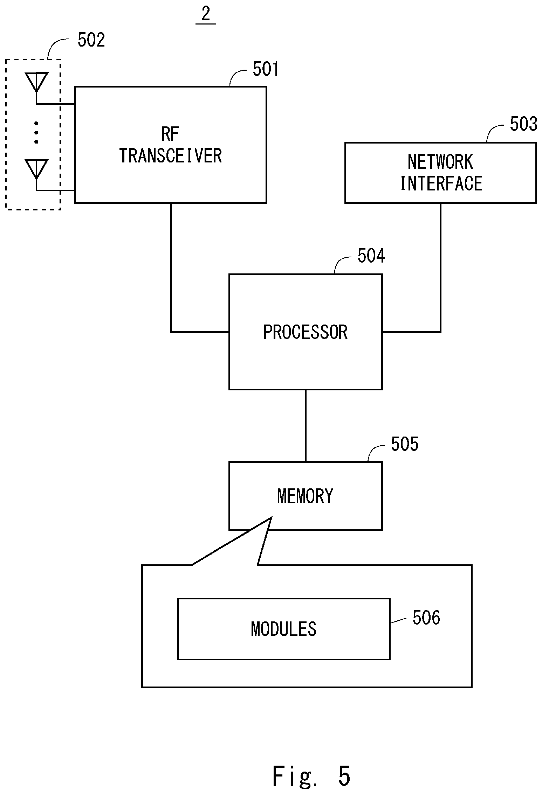

Figure 5 is a block diagram showing a configuration example of the RAN node 2 according to the above-described embodiments. Referring to Figure 5, the RAN node 1 includes an RF transceiver 501, a network interface 503, a processor 504, and a memory 505. The RF transceiver 501 performs analog RF signal processing to communicate with UEs. The RF transceiver 501 may include a plurality of transceivers. The RF transceiver 501 is coupled to an antenna array 502 and the processor 504. The RF transceiver 501 receives modulated symbol data from the processor 504, generates a transmission RF signal, and supplies the transmission RF signal to the antenna array 502. Further, the RF transceiver 501 generates a baseband reception signal based on a reception RF signal received by the antenna array 502 and supplies the baseband reception signal to the processor 504. The RF transceiver 501 may include an analog beamformer circuit for beam forming. The analog beamformer circuit includes, for example, a plurality of phase shifters and a plurality of power amplifiers.

The network interface 503 is used to communicate with network nodes (e.g., other RAN nodes and core network nodes). The network interface 503 may include, for example, a network interface card (NIC) conforming to the IEEE 802.3 series.

The processor 504 performs digital baseband signal processing (i.e., data-plane processing) and control-plane processing for radio communication. The processor 504 may include a plurality of processors. The processor 504 may include, for example, a modem processor (e.g., DSP) that performs digital baseband signal processing and a protocol stack processor (e.g., CPU or MPU) that performs the control-plane processing.

The digital baseband signal processing by the processor 504 may include, for example, signal processing of an SDAP layer, a PDCP layer, an RLC layer, a MAC layer, and a PHY layer. The control-plane processing performed by the processor 504 may include processing of NAS protocols, RRC protocols, MAC CEs, and DCIs.

The processor 504 may include a digital beamformer module for beam forming. The digital beamformer module may include a Multiple Input Multiple Output (MIMO) encoder and a pre-coder.

The memory 505 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 505 may include a storage located apart from the processor 504. In this case, the processor 504 may access the memory 505 via the network interface 503 or an I/O interface.

The memory 505 may store one or more software modules (computer programs) 506 including instructions and data to perform processing by the RAN node 2 described in the above embodiments. In some implementations, the processor 504 may be configured to load the software modules 506 from the memory 505 and execute the loaded software modules, thereby performing processing of the RAN node 2 described in the above embodiments.

When the RAN node 2 is a Central Unit (e.g., gNB-CU) in the C-RAN deployment, the RAN node 2 does not need to include the RF transceiver 501 (and the antenna array 502).

The User Equipment (UE) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. It will be appreciated that the terms "UE" and "radio terminal" also encompass devices that remain stationary for a long period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper projecting machinery; chemical machinery; mining and/or construction machinery and/or related equipment; machinery and/or implements for agriculture, forestry and/or fisheries; safety and/or environment preservation equipment; tractors; bearings; precision bearings; chains; gears; power transmission equipment; lubricators; valves; pipe fittings; and/or application systems for any of the previously mentioned equipment or machinery etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons etc.).

A UE may, for example, be an item of information and communication equipment (for example information and communication equipment such as: electronic computer and related equipment; communication and related equipment; electronic components etc.).

A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag etc.), a watch or clock, a laboratory instrument, optical apparatus, medical equipment and/or system, a weapon, an item of cutlery, a hand tool, or the like.

A UE may, for example, be a wireless-equipped personal digital assistant or related equipment (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. Internet of Things devices (or "things") may be equipped with appropriate electronics, software, sensors, network connectivity, and/or the like, which enable these devices to collect and exchange data with each other and with other communication devices. IoT devices may comprise automated equipment that follow software instructions stored in an internal memory. IoT devices may operate without requiring human supervision or interaction. IoT devices might also remain stationary and/or inactive for a long period of time. IoT devices may be implemented as a part of a (generally) stationary apparatus. IoT devices may also be embedded in non-stationary apparatus (e.g., vehicles) or attached to animals or persons to be monitored/tracked. It will be appreciated that IoT technology can be implemented on any communication devices that can connect to a communications network for sending/receiving data, regardless of whether such communication devices are controlled by human input or software instructions stored in memory. It will be appreciated that IoT devices are sometimes also referred to as Machine-Type Communication (MTC) devices, Machine-to-Machine (M2M) communication devices, or Narrow Band-IoT (NB-IoT) UE.

It will be appreciated that a UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes Security, Tracking & Tracing, Payment, Health, Remote Maintenance/Control, Metering, and Consumer Devices.

Examples of the MTC applications regarding Security include Surveillance systems, Backup for landline, Control of physical access (e.g., to buildings), and Car/driver security.

Examples of the MTC applications regarding Tacking & Tracing include Fleet Management, Order Management, Telematics insurance: Pay as you drive (PAYD), Asset Tracking, Navigation, Traffic information, Road tolling, and Road traffic optimisation/steering.

Examples of the MTC applications regarding Payment include Point of sales (POS), Vending machines, and Gaming machines.

Examples of the MTC applications regarding Health include Monitoring vital signs, Supporting the aged or handicapped, Web Access Telemedicine points, and Remote diagnostics.

Examples of the MTC applications regarding Remote Maintenance/Control include Sensors, Lighting, Pumps, Valves, Elevator control, Vending machine control, and Vehicle diagnostics.

Examples of the MTC applications regarding Metering include Power, Gas, Water, Heating, Grid control, and Industrial metering.

Examples of the MTC applications regarding Consumer Devices include Digital photo frame, Digital camera, and eBook.

Applications, services, and solutions may be an Mobile Virtual Network Operator (MVNO) service/system, an emergency radio communication service/system, a Private Branch eXchange (PBX) service/system, a PHS/Digital Cordless Telecommunications service/system, a Point of sale (POS) service/system, an advertise calling service/system, a Multimedia Broadcast and Multicast Service (MBMS) service/system, a Vehicle to Everything (V2X) service/system, a train radio service/system, a location related service/system, a Disaster/Emergency Wireless Communication Service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a Proof of Concept (PoC) service/system, a personal information management service/system, a display video service/system, a noncommunication service/system, an ad-hoc network/ Delay Tolerant Networking (DTN) service/system, etc.

The above-described UE categories are merely examples of applications of the technical ideas and embodiments described in the present disclosure. The UE described in this disclosure is not limited to these examples and various modifications can be made thereto by those skilled in the art.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

User Equipment (UE) comprising:
at least one memory; and
at least one processor coupled to the at least one memory and configured to receive system information from at least one radio access network (RAN) node before the UE performs roaming outside a range of a Home Public Land Mobile Network (HPLMN) of the UE, wherein
the system information includes information indicating at least one Visited PLMN (VPLMN), and
the system information further includes an indication, for each of the at least one VPLMN, of whether a particular communication service that is associated with at least one network slice instance of a network slice of the HPLMN can be provided in at least one network slice instance of a network slice of the VPLMN.

### (Supplementary Note 2)

The UE according to Supplementary Note 1, wherein the at least one processor is configured to perform PLMN selection using the indication, in order to perform the roaming.

### (Supplementary Note 3)

The UE according to Supplementary Note 2, wherein the at least one processor is configured to not consider a VPLMN in which the particular communication service is not available as a candidate for the PLMN selection if the UE is expecting to use the particular communication service when making the PLMN selection.

### (Supplementary Note 4)

The UE according to Supplementary Note 2 or 3, wherein the at least one processor is configured to, if the UE is expecting to use the particular communication service when making the PLMN selection, preferentially select a first VPLMN that is included in an Operator Controlled PLMN Selector with Access Technology data file and in which the particular communication service can be provided in at least one network slice instance, over a second VPLMN that is included in the Operator Controlled PLMN Selector with Access Technology data file but in which the particular communication service is not available.

### (Supplementary Note 5)

The UE according to any one of Supplementary Notes 2 to 4, wherein the at least one processor is configured to, if the UE is expecting to use the particular communication service when making the PLMN selection, preferentially select a third VPLMN that is included in a User Controlled PLMN Selector with Access Technology data file and in which the particular communication service can be provided in at least one network slice instance, over a fourth VPLMN that is included in the User Controlled PLMN Selector with Access Technology data file but in which the particular communication service is not available.

### (Supplementary Note 6)

The UE according to any one of Supplementary Notes 2 to 5, wherein the at least one processor is configured to perform the PLMN selection based on the indication and a Slice-aware PLMN selector with Access Technology data file provided by a provider.

### (Supplementary Note 7)

The UE according to any one of Supplementary Notes 1 to 6, wherein the indication represents a provider of the particular communication service.

### (Supplementary Note 8)

The UE according to any one of Supplementary Notes 1 to 6, wherein the indication represents the particular communication service.

### (Supplementary Note 9)

The UE according to any one of Supplementary Notes 1 to 6, wherein the indication represents an identifier of the network slice of the HPLMN.

### (Supplementary Note 10)

A radio access network (RAN) node comprising:
at least one memory; and
at least one processor coupled to the at least one memory and configured to transmit system information in a cell, wherein
the system information includes information indicating at least one Public Land Mobile Network (PLMN), and
the system information further includes an indication, for each of the at least one PLMN, of whether a particular communication service that is associated with at least one network slice instance of a network slice of a different PLMN than the at least one PLMN can be provided in at least one network slice instance of the PLMN.

### (Supplementary Note 11)

The RAN node according to Supplementary Note 10, wherein the indication is used for PLMN selection for roaming by a User Equipment (UE) whose Home PLMN (HPLMN) is the different PLMN than the at least one PLMN.

### (Supplementary Note 12)

The RAN node according to Supplementary Note 11, wherein the indication causes the UE to not consider a Visited PLMN (VPLMN) in which the particular communication service is not available as a candidate for the PLMN selection if the UE is expecting to use the particular communication service when making the PLMN selection.

### (Supplementary Note 13)

The RAN node according to Supplementary Note 11, wherein the indication causes the UE to, if the UE is expecting to use the particular communication service when making the PLMN selection, preferentially select a first Visited PLMN (VPLMN) that is included in an Operator Controlled PLMN Selector with Access Technology data file and in which the particular communication service can be provided in at least one network slice instance, over a second VPLMN that is included in the Operator Controlled PLMN Selector with Access Technology data file but in which the particular communication service is not available.

### (Supplementary Note 14)

The RAN node according to Supplementary Note 11, wherein the indication causes the UE to, if the UE is expecting to use the particular communication service when making the PLMN selection, preferentially select a third Visited PLMN (VPLMN) that is included in a User Controlled PLMN Selector with Access Technology data file and in which the particular communication service can be provided in at least one network slice instance, over a fourth VPLMN that is included in the User Controlled PLMN Selector with Access Technology data file but in which the particular communication service is not available.

### (Supplementary Note 15)

The RAN node according to any one of Supplementary Notes 11 to 14, wherein the indication, together with a Slice-aware PLMN selector with Access Technology data file provided by a provider, causes the UE to perform the PLMN selection.

### (Supplementary Note 16)

The RAN node according to any one of Supplementary Notes 10 to 15, wherein the indication represents a provider of the particular communication service.

### (Supplementary Note 17)

The RAN node according to any one of Supplementary Notes 10 to 15, wherein the indication represents the particular communication service.

### (Supplementary Note 18)

The RAN node according to any one of Supplementary Notes 10 to 15, wherein the indication represents an identifier of the network slice of the different PLMN than the at least one PLMN.

### (Supplementary Note 19)

A method performed by a User Equipment (UE), the method comprising:
receiving system information from at least one radio access network (RAN) node before the UE performs roaming outside a range of a Home Public Land Mobile Network (HPLMN) of the UE, wherein
the system information includes information indicating at least one Visited PLMN (VPLMN), and
the system information further includes an indication, for each of the at least one VPLMN, of whether a particular communication service that is associated with at least one network slice instance of a network slice of the HPLMN can be provided in at least one network slice instance of a network slice of the VPLMN.

### (Supplementary Note 20)

A method performed by a radio access network (RAN) node, the method comprising:
transmitting system information in a cell, wherein
the system information includes information indicating at least one Public Land Mobile Network (PLMN), and
the system information further includes an indication, for each of the at least one PLMN, of whether a particular communication service that is associated with at least one network slice instance of a network slice of a different PLMN than the at least one PLMN can be provided in at least one network slice instance of the PLMN.

### (Supplementary Note 21)

A program that, when executed by a computer implemented in a User Equipment (UE), causes said computer to perform a method comprising:
receiving system information from at least one radio access network (RAN) node before the UE performs roaming outside a range of a Home Public Land Mobile Network (HPLMN) of the UE, wherein
the system information includes information indicating at least one Visited PLMN (VPLMN), and
the system information further includes an indication, for each of the at least one VPLMN, of whether a particular communication service that is associated with at least one network slice instance of a network slice of the HPLMN can be provided in at least one network slice instance of a network slice of the VPLMN.

### (Supplementary Note 22)

A program that, when executed by a computer implemented in a radio access network (RAN) node, causes said computer to perform a method comprising:
transmitting system information in a cell, wherein
the system information includes information indicating at least one Public Land Mobile Network (PLMN), and
the system information further includes an indication, for each of the at least one PLMN, of whether a particular communication service that is associated with at least one network slice instance of a network slice of a different PLMN than the at least one PLMN can be provided in at least one network slice instance of the PLMN.

This application is based upon and claims the benefit of priority from Japanese Patent Application No. 2020-088819, filed on May 21, 2020, the disclosure of which is incorporated herein in its entirety by reference.

### Reference Signs List

- 1: UE
- 2A, 2B, 2C: RAN NODE
- 11: UICC
- 12: ME

## Claims

1. User Equipment (UE) comprising:
at least one memory; and
at least one processor coupled to the at least one memory and configured to receive system information from at least one radio access network (RAN) node before the UE performs roaming outside a range of a Home Public Land Mobile Network (HPLMN) of the UE, wherein
the system information includes information indicating at least one Visited PLMN (VPLMN), and
the system information further includes an indication, for each of the at least one VPLMN, of whether a particular communication service that is associated with at least one network slice instance of a network slice of the HPLMN can be provided in at least one network slice instance of a network slice of the VPLMN.

2. The UE according to claim 1, wherein the at least one processor is configured to perform PLMN selection using the indication, in order to perform the roaming.

3. The UE according to claim 2, wherein the at least one processor is configured to not consider a VPLMN in which the particular communication service is not available as a candidate for the PLMN selection if the UE is expecting to use the particular communication service when making the PLMN selection.

4. The UE according to claim 2 or 3, wherein the at least one processor is configured to, if the UE is expecting to use the particular communication service when making the PLMN selection, preferentially select a first VPLMN that is included in an Operator Controlled PLMN Selector with Access Technology data file and in which the particular communication service can be provided in at least one network slice instance, over a second VPLMN that is included in the Operator Controlled PLMN Selector with Access Technology data file but in which the particular communication service is not available.

5. The UE according to any one of claims 2 to 4, wherein the at least one processor is configured to, if the UE is expecting to use the particular communication service when making the PLMN selection, preferentially select a third VPLMN that is included in a User Controlled PLMN Selector with Access Technology data file and in which the particular communication service can be provided in at least one network slice instance, over a fourth VPLMN that is included in the User Controlled PLMN Selector with Access Technology data file but in which the particular communication service is not available.

6. The UE according to any one of claims 2 to 5, wherein the at least one processor is configured to perform the PLMN selection based on the indication and a Slice-aware PLMN selector with Access Technology data file provided by a provider.

7. The UE according to any one of claims 1 to 6, wherein the indication represents a provider of the particular communication service.

8. The UE according to any one of claims 1 to 6, wherein the indication represents the particular communication service.

9. The UE according to any one of claims 1 to 6, wherein the indication represents an identifier of the network slice of the HPLMN.

10. A radio access network (RAN) node comprising:
at least one memory; and
at least one processor coupled to the at least one memory and configured to transmit system information in a cell, wherein
the system information includes information indicating at least one Public Land Mobile Network (PLMN), and
the system information further includes an indication, for each of the at least one PLMN, of whether a particular communication service that is associated with at least one network slice instance of a network slice of a different PLMN than the at least one PLMN can be provided in at least one network slice instance of the PLMN.

11. The RAN node according to claim 10, wherein the indication is used for PLMN selection for roaming by a User Equipment (UE) whose Home PLMN (HPLMN) is the different PLMN than the at least one PLMN.

12. The RAN node according to claim 11, wherein the indication causes the UE to not consider a Visited PLMN (VPLMN) in which the particular communication service is not available as a candidate for the PLMN selection if the UE is expecting to use the particular communication service when making the PLMN selection.

13. The RAN node according to claim 11, wherein the indication causes the UE to, if the UE is expecting to use the particular communication service when making the PLMN selection, preferentially select a first Visited PLMN (VPLMN) that is included in an Operator Controlled PLMN Selector with Access Technology data file and in which the particular communication service can be provided in at least one network slice instance, over a second VPLMN that is included in the Operator Controlled PLMN Selector with Access Technology data file but in which the particular communication service is not available.

14. The RAN node according to claim 11, wherein the indication causes the UE to, if the UE is expecting to use the particular communication service when making the PLMN selection, preferentially select a third Visited PLMN (VPLMN) that is included in a User Controlled PLMN Selector with Access Technology data file and in which the particular communication service can be provided in at least one network slice instance, over a fourth VPLMN that is included in the User Controlled PLMN Selector with Access Technology data file but in which the particular communication service is not available.

15. The RAN node according to any one of claims 11 to 14, wherein the indication, together with a Slice-aware PLMN selector with Access Technology data file provided by a provider, causes the UE to perform the PLMN selection.

16. The RAN node according to any one of claims 10 to 15, wherein the indication represents a provider of the particular communication service.

17. The RAN node according to any one of claims 10 to 15, wherein the indication represents the particular communication service.

18. The RAN node according to any one of claims 10 to 15, wherein the indication represents an identifier of the network slice of the different PLMN than the at least one PLMN.

19. A method performed by a User Equipment (UE), the method comprising:
receiving system information from at least one radio access network (RAN) node before the UE performs roaming outside a range of a Home Public Land Mobile Network (HPLMN) of the UE, wherein
the system information includes information indicating at least one Visited PLMN (VPLMN), and
the system information further includes an indication, for each of the at least one VPLMN, of whether a particular communication service that is associated with at least one network slice instance of a network slice of the HPLMN can be provided in at least one network slice instance of a network slice of the VPLMN.

20. A method performed by a radio access network (RAN) node, the method comprising:
transmitting system information in a cell, wherein
the system information includes information indicating at least one Public Land Mobile Network (PLMN), and
the system information further includes an indication, for each of the at least one PLMN, of whether a particular communication service that is associated with at least one network slice instance of a network slice of a different PLMN than the at least one PLMN can be provided in at least one network slice instance of the PLMN.

21. A non-transitory computer readable medium storing a program that, when executed by a computer implemented in a User Equipment (UE), causes said computer to perform a method comprising:
receiving system information from at least one radio access network (RAN) node before the UE performs roaming outside a range of a Home Public Land Mobile Network (HPLMN) of the UE, wherein
the system information includes information indicating at least one Visited PLMN (VPLMN), and
the system information further includes an indication, for each of the at least one VPLMN, of whether a particular communication service that is associated with at least one network slice instance of a network slice of the HPLMN can be provided in at least one network slice instance of a network slice of the VPLMN.

22. A non-transitory computer readable medium storing a program that, when executed by a computer implemented in a radio access network (RAN) node, causes said computer to perform a method comprising:
transmitting system information in a cell, wherein
the system information includes information indicating at least one Public Land Mobile Network (PLMN), and
the system information further includes an indication, for each of the at least one PLMN, of whether a particular communication service that is associated with at least one network slice instance of a network slice of a different PLMN than the at least one PLMN can be provided in at least one network slice instance of the PLMN.
